# EUROPÄISCHE PATENTSCHRIFT

(11) **EP 1 505 845 B1**
(45) Veröffentlichungstag und Bekanntmachung des Hinweises auf die Patenterteilung: **22.03.2006**
(21) Anmeldenummer: 03017895.8
(22) Anmeldetag: 05.08.2003
(51) Int. Cl.: H04Q 7/34

(54) **Verfahren und Vorrichtung zum Ermitteln mindestens eines Übertragungsparameters in einem Übertragungssystem**
Method and device for determining at least one transmission parameter in a transmission system
Procédé et dispositif pour déterminer au moins un paramètre de transmission dans un système de transmission

(43) Veröffentlichungstag der Anmeldung: 09.02.2005
(73) Patentinhaber: Tektronix International Sales GmbH, 8212 Neuhausen (CH)
(72) Erfinder: Al-Zain, Djamal, 13347 Berlin (DE); Laake, Heinz-Joachim, 16727 Oberkraemer (DE); Lenz, Konrad, 13587 Berlin (DE)
(74) Vertreter: Schurack, Eduard F.

(56) Entgegenhaltungen:
- EP-A- 0 713 310
- WO-A-03/025767
- WO-A-03/047280

## Beschreibung

Die vorliegende Erfindung betrifft ein Verfahren und eine Vorrichtung zum Ermitteln mindestens eines Übertragungsparameters an einer zwischen einem ersten und einem zweiten Knoten eines Übertragungssystems angeordneten Schnittstelle, wobei zwischen dem ersten und dem zweiten Knoten mehrere Kanäle bestehen, die zum einen der Kommunikation zwischen Knoten des Übertragungssystems, zum anderen der Kommunikation eines Knotens des Übertragungssystems mit mindestens einem Teilnehmer dienen, wobei für die Kommunikation zwischen Knoten des Übertragungssystems eine vorgegebene Anzahl von Kommunikationsprotokollen in Betracht kommt, wobei der mindestens eine Übertragungsparameter angibt, ob es sich bei einem bestimmten Kanal um einen Kanal zur Kommunikation zwischen Knoten des Übertragungssystems handelt oder um einen Kanal zur Kommunikation mit mindestens einem Teilnehmer.

Die vorliegende Erfindung findet insbesondere Anwendung im Bereich von Mobilfunknetzen. Gemäß einem früheren Netzstandard, der unter der Bezeichnung GSM bekannt ist, wurde von einem Teilnehmer eine Funkfrequenz belegt, die nur diesem Teilnehmer zugewiesen war. Diese Frequenz wurde von dem Teilnehmer solange belegt, wie er seine Verbindung aufrechterhalten hat, egal ob Sprechpausen vorgekommen sind und unabhängig von den von ihm eingekauften Leistungen und Diensten, die von den zugehörigen Providern angeboten werden. Da es sich bei Funkfrequenzen um eine Ressource handelt, die knapp ist und sich nicht beliebig vervielfältigen lässt, wurde dieser Zustand als verbesserungswürdig angesehen. Nach diesem System der sogenannten zweiten Generation folgte als System der 2.5ten Generation das sogenannte GPRS. Als Vertreter der dritten Generation schloss sich das UMTS-Netz an. Über dieses Netz ist eine vielfache Anzahl von Teilnehmern verglichen mit dem GSM-Netz bedienbar, die zur Verfügung stehenden Kanäle werden effizienter verteilt, beispielsweise wird bei geringer Sprachaktivität eine geringere Kapazität beansprucht. Überdies lässt sich die Kapazität in Abhängigkeit der eingekauften Leistungen und Dienste variieren. Beim UMTS-Netz werden auf den Kanälen verschiedenartige Informationen übertragen, beispielsweise Informationen zwischen Knoten des Übertragungssystems, Informationen, die an mehrere Teilnehmer gerichtet sind, sowie Informationen, die an nur einen bestimmten Teilnehmer gerichtet sind. Die Informationen teilen sich auf in Nutzinformationen sowie Management-Informationen. Für Monitorgeräte oder Protokolltester oder dergleichen, denen nur eine bestimmte Schnittstelle in einem derartigen Mobilfunknetz zugänglich ist, besteht nun das Problem, dass sie aus einer bereits aufgebauten Übertragung herausfinden müssen, wie die einzelnen Kanäle belegt sind, um eine Entschlüsselung und damit eine Weiterverarbeitung der übertragenen Daten zu ermöglichen.

Wenngleich die vorliegende Erfindung der besseren Verständlichkeit wegen im Nachfolgenden am Beispiel eines UMTS-Netzes beschrieben werden wird, so lässt sich die Erfindung selbstverständlich auch bei Netzen eines anderen Standards, insbesondere Mobilfunknetzen zukünftiger Standards, anwenden, sofern sie dem obigen Gattungsbegriff genügen.

Weitere Informationen zu den im Nachfolgenden im Zusammenhang mit den UMTS-Netz verwendeten Begriffen können beispielsweise den folgenden, über die Domain www.3GPP.org zu beziehenden Dokumenten entnommen werden: Das Dokument 3GPP TS 25.301 gibt einen Überblick über die Kanalbelegung bei einem UMTS-Netz. Die Dokumente 3GPP TS 25.427 und 3GPP TS 25.435 befassen sich mit dem Frame-Protokoll, das Dokument 3GPP TS 25.321 mit dem MAC, das Dokument 3GPP TS 25.322 mit der RLC, das Dokument 3GPP TS 25.331 mit dem RRC und schließlich das Dokument 3GPP TS 25.433 mit dem NBAP. Weitere Informationen zum ALCAP können der ITU-Richtlinie ITU Q.2630.2 entnommen werden. Zum SSCOP wird verwiesen auf die ITU-Richtlinie ITU Q.2110.2.

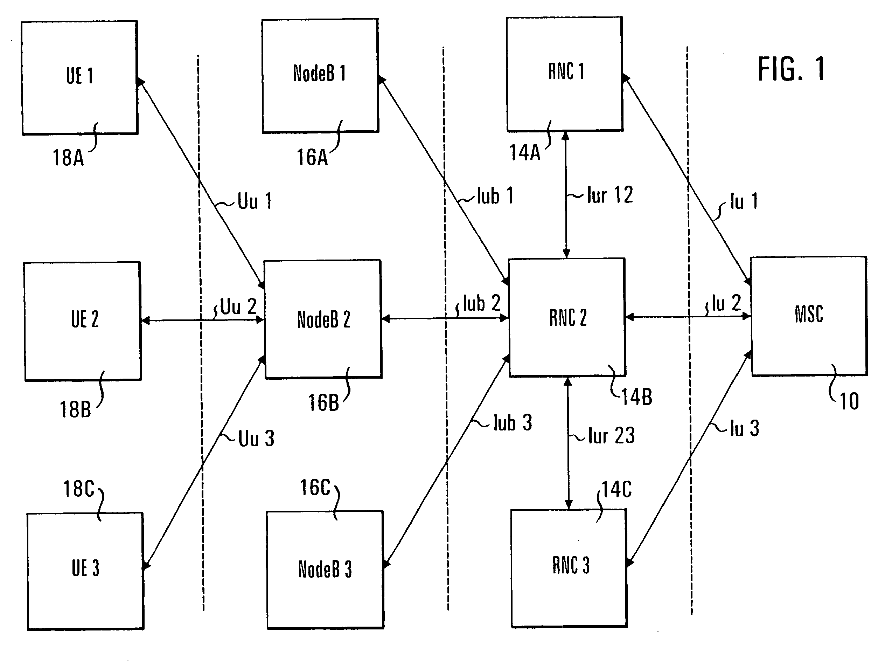

Figur 1 zeigt zum besseren Verständnis der der Erfindung zugrundeliegenden Problematik einen Ausschnitt eines UMTS-Netzes mit einem MSC 10, drei RNCs (Radio Network Controller) 14A, 14B, 14C, drei Nodes B 16A, 16B, 16C sowie drei User Equipments 18A, 18B, 18C. Zwischen dem MSC 10 und jedem RNC 14 ist jeweils eine lu-Schnittstelle angeordnet, zwischen dem RNC 14B und jedem Node B 16A, 16B, 16C jeweils eine lub-Schnittstelle, zwischen den RNCs 14A, 14B, 14C jeweils eine lur-Schnittstelle und zwischen den User Equipments 18A bis 18C und dem Node B 16B jeweils eine Uu-Schnittstelle.

Zur weiteren Verbesserung der Verständlichkeit wird in der nachfolgenden ausführlichen Beschreibung davon ausgegangen, dass das erfindungsgemäße Verfahren beispielhaft an der lub-Schnittstelle ausgeführt wird, bzw. eine erfindungsgemäße Vorrichtung an dieser Schnittstelle angeordnet ist. Die Funktionen eines Node B lassen sich wie folgt zusammenfassen: Er bildet einen logischen Knoten, wie beispielsweise das BTS in einem GSM-Netz; er ist verantwortlich für das Senden und Empfangen in einer oder mehreren Funkzellen, sogenannte cells, an/von User Equipment; er terminiert die lub-Schnittstelle, d. h. den NBAP und den ALCAP; er dient der RF-Leistungsregelung und er steuert eine vorgebbare Anzahl von Funkzellen. Ein Node B ist demnach eine Basisstation, an der mehrere Sende- und Empfangsantennen angeschlossen sind, wobei jeweils eine derartige Antennenkombination eine Funkzelle definiert. Ein RNC steuert die Verwendung und die Integrität der Funkressourcen; er terminiert RANAP, NBAP, ALCAP, RNSAP sowie RRC/RLC/MAC und er bildet das zentrale Element eines UMTS-Netzes. Ein RNC ist demnach eine Funkvermittlungsstation, an der mehrere derartige Basisstationen angeschlossen sind.

Die Funktionen des an der lub-Schnittstelle verwendeten Protokolls lassen sich wie folgt beschreiben: Management der lub-Transport-Ressourcen, logischer Betrieb und Maintenance des Node B, insbesondere lub-Link-Management, Funkzelle-Konfigurations-Management, Radio-Network Performance-Messungen, Resource Event-Management, Management des CTCH (Common Transport Channel), Radio Resource-Management und Radio-Network Configuration Alignment. Es umfasst weiterhin die Implementierung eines spezifischen Betriebs- und Maintenance-Transports, sowie die Funktion des Systeminformations-Managements. Darüber hinaus sind an der lub-Schnittstelle folgende Funktionen realisiert: Traffic-Management für Common Channels, d. h. für Kanäle, die für alle am entsprechenden Node B angeschlossenen Teilnehmer gelten, insbesondere Zugangssteuerungen, Leistungsmanagement und Datenübertragung. Weiterhin übernimmt es die Funktionen des Traffic-Managements für Dedicated Channels, d. h. Kanäle, die einem bestimmten Teilnehmer zugeordnet sind, insbesondere Radio Link-Management, Radio Link Supervision, Channel Allocation/Deallocation, Leistungsmanagement, Messungsbericht, Dedicated Transportkanal-Management sowie Datenübertragung.

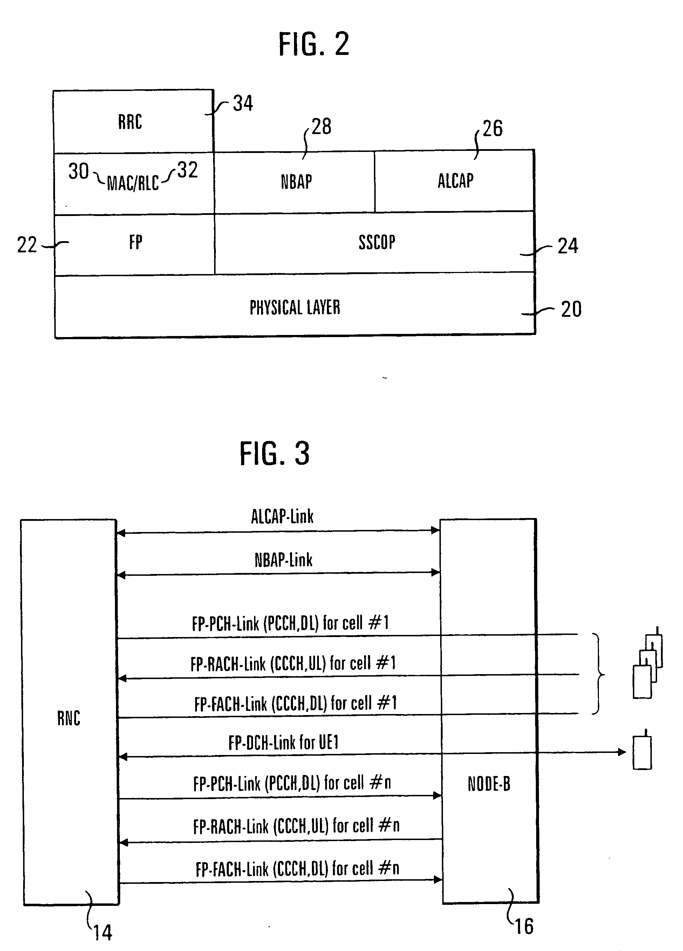

Figur 2 zeigt die an der lub-Schnittstelle involvierten Protokolle und Layer. Die unterste Protokollschicht bildet der Physical Layer 20, auf dem einerseits die Frame-Protokolle FP 22 aufsetzen, andererseits Protokolle SSCOP 24 einer Abschnittssicherungsschicht. Auf die Schicht 24 folgen der ALCAP (Access Link Control Application Part) 26 sowie der NBAP (Node B Application Part) 28, die dem Basistations-Management dienen. Eine NBAP-Verbindung dient insbesondere zur Konfiguration der Funkzellen und öffnet die Kanäle für die Funkzellen. Eine ALCAP-Verbindung definiert die Belegung der von NBAP geöffneten Kanäle. Während der ALCAP 26 spezifisch ist für eine ATM (Asynchronous Transfer Mode)-Transportschicht, entfällt der ALCAP bei einer IP-Protokoll-Transportschicht. Im folgenden wird jedoch von einer ATM-Transportschicht ausgegangen, um auch die Unterscheidung zwischen NBAP und ALCAP beschreiben zu können. Selbstverständlich ist die Erfindung auch für eine IP-Protokoll-Transportschicht anwendbar, wobei jedoch dann die Unterscheidung zwischen NBAP und ALCAP zwangsläufig entfällt.

ALCAP 26 und NBAP 28 dienen der Kommunikation zwischen dem RNC und dem Node B. Bei den Frame-Protokollen 22 handelt es sich im Einzelnen um die Kanaltypen FACH, RACH und PCH, die an alle Teilnehmer eines Node B weitergereicht werden, sowie DCH, das dediziert an einen bestimmten Teilnehmer übermittelt wird. Um auf einem Frame-Protokoll mehrere logische Kommandoebenen darstellen zu können, setzen auf den genannten Frame-Protokollen die logischen Kanäle MAC 30 und RLC 32 auf. Auf den Protokollen 30, 32 setzt der RRC 34 auf, bei dem es sich um einen Radio Resource Controller handelt.

Figur 3 zeigt eine detailliertere schematische Darstellung der zwischen einem RNC 14 und einem Node B 16 verwendeten Verbindungen (Links). Zunächst einen ALCAP-Link, einen NBAP-Link, die der Kommunikation zwischen RNC 14 und Node B 16 dienen, dann einen FP (Frame-Protokoll) PCH-Link für die Funkzelte-Nr.1, d. h. all die Teilnehmer, die der Funkzelle-1 zugeordnet sind, einen FP-RACH-Link für die Funkzelle-Nr. 1 sowie einen FP-FACH-Link für die Funkzelle-Nr. 1, schließlich einen FP-DCH-Link für das User Equipment Nr. 1. Beispielhaft sind weitere FP-Links für die Funkzelle-Nr. n eingezeichnet. Wie der Figur 3 entnommen werden kann, enden die Verbindungen ALCAP und NBAP im jeweiligen Knoten, während die Verbindungen PCH, RACH und FACH node-B-seitenmäßig zu den mehreren Teilnehmern durchgeschleust werden und die Verbindung DCH zu einem bestimmten Teilnehmer. Ergänzend sei angemerkt, dass bei einem GSM-Netz die in den sechs genannten Kanälen übertragene Information in einem einzigen Kanal übertragen wird und daher die Problematik der Unterscheidung der einzelnen Kanäle, wie beim vorliegenden UMTS-Netz gar nicht auftritt.

Um nun beispielsweise eine Monitoring-Aufgabe auf einer lub-Schnittstelle ausführen zu können, ist die Kenntnis der Belegung der einzelnen Kanäle nötig. Für weitergehende Auswertungen ist die Konfiguration für die Verbindungen NBAP, ALCAP und der Common sowie der Dedicated Control Channels für jeden mit den RNC verbundenen Node B und jede Funkzelle nötig. Unglücklicherweise werden die Control Channels dynamisch geöffnet mit variierenden Parametern. Ein Austausch der Konfigurationsparameter der Frame-Protokolle sowie von MAC und RLC für diese Kanäle wird über die Links NBAP und ALCAP nur während der initialisierungsphase jedes Node B übertragen.

In einem aktiven UMTS-Netzwerk ist es jedoch nicht möglich, die Nodes B zu reinitialisieren, um die Kanalkonfiguration für Monitorzwecke zu bestimmen, jedes Mal wenn ein Monitorgerät oder ein Testgerät angeschaltet wird.

In einem hausintemen Stand der Technik wurde versuchsweise ein Verfahren praktiziert, bei dem der Physical Layer ausgewertet wird und zwar im Hinblick auf die Länge der verwendeten Datenpakete. Dieses Verfahren basiert darauf, dass die Länge der Datenpakete vom Anwender konfiguriert werden kann. Durch die anwenderspezifischen Längen ist die Art der Daten festgelegt. Die entsprechenden Längen wurden ermittelt und anwenderbezogen, d. h. insbesondere geordnet nach Anbietern und Betreibern des jeweiligen Netzes, in einer Datenbank abgelegt. Wenn nun die lub-Schnittstelle eines bestimmten Betreibers überwacht werden sollte, wurden der entsprechende Datenbankeintrag abgefragt und die entsprechenden Parameter geladen. Dieses Verfahren bietet jedoch keine zufriedenstellende Lösung für Monitoring-Aufgaben, bei denen die entsprechenden vom Anwender verwendeten Parameter nicht bekannt sind oder zwischenzeitlich geändert wurden.

Die WO 03/025767 A2 betrifft Computersteuereinrichtungen, wobei ein Master Controller mit einem Systembus gemäß einem bestimmten Kommunikationsprotokoll interagiert und wobei andere Geräte, die mit dem Mastercontroller interagieren, mit dem Bus verbunden sind, ohne notwendigerweise zu wissen, welches Bus-Protokoll benutzt wird. Gemäß der WO 03/025767 A2 sind diese anderen Geräte ausgelegt mit einer bestimmten Anzahl verschiedener Bus-Kommunikationsprotokolle arbeiten zu können. Damit diese Geräte mit dem Master-Controller agieren können, muss am jeweiligen Gerät, das auf dem Bus verwendete Kommunikationsprotokoll bestimmt werden. Zwei Wege werden hierzu vorgeschlagen: Ein erster Weg besteht darin, ein Signal vom Systembus an das Gerät zu schicken, wobei ein Geräteprozessor den Inhalt und die Länge des Signals bestimmt, die dann mit einem Satz von Signalen verglichen werden, die für bestimmte Kommunikationsprotokolle spezifisch sind, um das Protokoll zu bestimmen, das verwendet wurde, um das Signal zu senden. Falls das Signal nicht zugeordnet werden kann, wird das nächste Signal des Busses verarbeitet. Kann das Signal zugeordnet werden, dann werden alle anderen Signale gemäß dem bestimmten Protokoll verarbeitet. Alternativ wird das Verhältnis zwischen zwei oder mehreren Signalen bestimmt, das spezifisch für ein Kommunikationsprotokoll ist. Als weitere Alternative wird das Verhältnis zwischen dem Anteil von Signaltypen oder Checksummen oder Steuerungssignalen (Physical Layer) verwendet, um das Kommunikationsprotokoll zu bestimmen. Der Geräteprozessor hat zu diesem Zweck eine Look-up Table, in der jede bestimmte Nachricht jedes Verhältnis und jede Frequenz, die mit einem bestimmten Kommunikationsprotokoll korrespondiert, eingetragen sind. Durch Vergleichen mit den Tabelleneinträgen wird das verwendete Kommunikationsprotokoll festgestellt.

Die EP 0 713 310 A2 offenbart ein Verfahren zur Erkennung von zum Teil herstellerabhängigen LAN-Protokollen, bei dem eine Analyse einzelner Header-Octets zur kompletten Protokollerkennung ausreichend ist (siehe dort Spalte 16 bis 20). Auch dort werden daher Daten analysiert und durch diese Analyse das verwendete Protokoll bestimmt.

Die Aufgabe der vorliegenden Erfindung besteht deshalb darin, das eingangs genannte Verfahren bzw. die eingangs genannte Vorrichtung derart weiterzubilden, dass die Durchführung von Monitoring-Aufgaben nochmals erleichtert wird.

Diese Aufgabe wird erfindungsgemäß gelöst durch ein Verfahren mit den Merkmalen von Patentanspruch 1 sowie eine Vorrichtung gemäß Patentanspruch 12.

Die vorliegende Erfindung beruht auf der Erkenntnis, dass die obige Aufgabe durch einen Autokonfigurationsprozess gelöst werden kann, bei dem die einzelnen Parameter auf Grund vorbekannter Unterscheidungsparameter oder nach dem Trial-and-Error-Verfahren automatisch ermittelt werden. Damit ist eine Ermittlung der relevanten Übertragungsparameter auch ohne Kenntnis anwenderspezifischer Längenvereinbarungen für Datenpakete möglich. Insbesondere orientieren sich die erfindungsgemäßen Schritte zur Ermittlung der Übertragungsparameter an den Standards, so dass anwenderspezifische Lösungen nicht berücksichtigt zu werden brauchen.

Während nämlich beim früheren Verfahren, das jedoch nur hausintern ausprobiert wurde, lediglich die physikalische Schicht ausgewertet wurde, werden nunmehr höhere Schichten zur Auswertung herangezogen, die frei sind von anwenderspezifischen Besonderheiten. Lediglich ergänzend, beispielsweise zu einer Beschleunigung des erfindungsgemäßen Verfahrens, können anwenderspezifische Vereinbarungen ausgewertet und verwertet werden. Generell ist deren Kenntnis jedoch nicht nötig.

Bei einer bevorzugten Ausführungsform des erfindungsgemäßen Verfahrens werden folgende Schritte durchgeführt: Zunächst wird ein an der Schnittstelle empfangener Datenstrom nach den für die Kommunikation zwischen den Knoten des Übertragungssystems oder die Kommunikation mit mindestens einem Teilnehmer der in Betracht kommenden Kommunikationsprotokollen decodiert. Die Decodierung wird eingestellt, sobald mit dem gegenwärtig verwendeten Kommunikationsprotokoll korrekte decodierte Daten entstehen oder alle in Betracht kommenden Kommunikationsprotokolle keine korrekten decodierten Daten ergeben haben. Anschließend wird das Ergebnis der Decodierung ausgewertet und folgende Entscheidung getroffen:

Erstens, der vorliegende Kanal dient der Kommunikation zwischen Knoten des Übertragungssystems, falls sich bei der Decodierung korrekte decodierte Daten ergeben, wenn ein Kommunikationsprotokoll für die Kommunikation zwischen den Knoten des Übertragungssystems verwendet wurde, oder falls sich bei der Decodierung keine korrekten decodierten Daten ergeben haben und alle Kommunikationsprotokolle für die Kommunikation mit mindestens einem Teilnehmer verwendet wurden. Oder es wird zweitens die Entscheidung getroffen, der vorliegende Kanal dient der Kommunikation mit mindestens einem Teilnehmer, falls sich bei der Decodierung korrekte decodierte Daten ergeben und ein Kommunikationsprotokoll für die Kommunikation mit mindestens einem Teilnehmer verwendet wurde, oder, falls sich bei der Decodierung keine korrekten decodierten Daten ergeben haben und alle Kommunikationsprotokolle für die Kommunikation zwischen den Knoten des Übertragungssystems verwendet wurden. Durch diese Maßnahme wird, bezogen auf das lub-Schnittstelle des UMTS-Netzes, eine Grobentscheidung getroffen, ob es sich bei dem vorliegenden Kanal um einen Kanal aus der Gruppe NBAP/ALCAP oder der Gruppe der Frame-Protokolle handelt.

Wird die oben als erste erwähnte Entscheidung getroffen und kommen mehrere Typen von Kommunikationskanälen zwischen den Knoten des Systems in Betracht, werden bevorzugt folgende weitere Schritte ausgeführt: Decodieren mindestens einer ersten Datenmenge des empfangenen Datenstroms unter der Annahme, es handelt sich um einen Kommunikationskanal eines ersten Typs. Anschließend wird das Ergebnis der Decodierung ausgewertet und folgende Entscheidung getroffen: Falls sich bei der Decodierung korrekte decodierte Daten ergeben: Erhöhung eines Zählerstands zu Gunsten der Entscheidung, dass es sich um einen Kommunikationskanal des ersten Typs handelt, um 1; oder, falls sich bei der Decodierung keine korrekten decodierten Daten ergeben: Der vorliegende Kanal ist kein Kommunikationskanal des ersten Typs. Diese Art der Vorgehensweise berücksichtigt, dass es Datenmuster geben kann, die sowohl bei einem NBAP-Link als auch bei einem ALCAP-Link Sinn machen. Daher werden bevorzugt Bit-Muster an verschiedenen Stellen in einem Rahmen ausgewertet und schließlich eine.Mehrheitsentscheidung getroffen. Die beiden zuletzt erwähnten Schritte des Decodierens und Auswertens werden bevorzugt wiederholt unter der Annahme, es handelt sich um einen Kommunikationskanal zumindest eines zweiten oder weiteren Typs. Dadurch kann dieser Typ Punkte sammeln und dadurch die letztendlich zu treffende Entscheidung beeinflussen. Die Schritte des Decodierens und Auswertens werden bevorzugt wiederholt für zumindest eine zweite oder weitere Datenmenge. Bevorzugt handelt es sich um eine andere Datenmenge in demselben Rahmen, jedoch können bei anderen Standards auch entsprechende Datenmengen in einem anderen Rahmen ausgewertet werden, d.h. insbesondere, dass innerhalb eines Rahmens an entsprechender Stelle angeordnete Bit-Muster ausgewertet werden.

Nach zumindest einer einmaligen Durchführung des zuletzt beschriebenen Auswertungsschritts wird dann eine Entscheidung getroffen, wonach ein Kommunikationskanal des Typs vorliegt, der den höchsten Zählerstand aufweist, oder, wenn der höchste Zählerstand von mindestens zwei Typen von Kommunikationskanälen eingenommen wird, gemäß einer vorab getroffenen Vereinbarung entschieden, welcher Typ von Kommunikationskanal vorliegt.

Wie bereits erwähnt, handelt es sich bei dem erfindungsgemäßen Verfahren beispielsweise um ein Übertragungssystem vom UMTS-Typ, die Schnittstelle kann ein lub- oder eine lur-Schnittstelle sein, der erste Knoten ein RNC-Knoten, der zweite Knoten Node B oder ein RNC-Knoten. Ein Kommunikationskanal für die Kommunikation zwischen zwei Knoten kann vom Typ NBAP und/oder ein anderer vom Typ ALCAP sein.

Wird oben die Entscheidung getroffen, dass der vorliegende Kanal der Kommunikation mit mindestens einem Teilnehmer dient und kommen mehrere Typen von Kommunikationskanälen zur Kommunikation mit mindestens einem Teilnehmer des Systems in Betracht, werden, bevorzugt für zumindest eine Protokollschicht, insbesondere für mehrere Protokollschichten in serieller Reihenfolge von der niedrigsten zur höchsten beteiligten Protokollschicht, folgende Schritte durchgeführt: Zunächst wird für eine vorbestimmte Datenmenge, insbesondere einen Rahmen, die zumindest ein Header-Kontrolldatenfeld innerhalb eines Header-Felds sowie ein Nutzdatenfeld umfasst, eine erste Headerlänge angenommen, das zugehörige Header-Kontrolldatenfeld berechnet und mit dem tatsächlichen Header-Kontrolldatenfeld verglichen. Stimmt das berechnete Header-Kontrolldatenfeld mit dem tatsächlichen Header-Kontrolldatenfeld überein, wird in Abhängigkeit der ermittelten Headerlänge der Kanal zu einem bestimmten Typ oder einer bestimmten Gruppe von Typen von Kommunikationskanälen zugeordnet. Bei Nichtübereinstimmen des berechneten Header-Kontrolldatenfelds mit dem tatsächlichen Header-Kontrolldatenfeld wird der vorhergehende Schritt der Annahme einer bestimmten Headerlänge mit unterschiedlichen angenommenen Headerlängen wiederholt, bis sich eine Übereinstimmung des berechneten Header-Kontrolldatenfelds mit dem tatsächlichen Header-Kontrolldatenfeld ergibt.

Bevorzugt werden nach Treffen der Entscheidung, dass der vorliegende Kanal der Kommunikation mit mindestens einem Teilnehmer dient, folgende weiteren Schritte durchgeführt: Zunächst wird überprüft, ob es sich bei dem bestimmten Kanal um einen Kanal zum Knoten oder um einen Kanal zum Teilnehmer handelt, und als nächstes der bestimmte Kanal zu einer Gruppe von Typen gemäß dem Ergebnis des Überprüfungsschrittes zugeordnet.

Zusätzlich oder alternativ können nach Treffen der Entscheidung, dass der vorliegende Kanal der Kommunikation mit mindestens einem Teilnehmer dient, folgende weiteren Schritte durchgeführt werden. Für eine vorbestimmte Datenmenge, insbesondere einen Rahmen, die zumindest ein Feld für eine laufende Nummer einer Datenlänge, insbesondere eines Rahmens, innerhalb eines Headerfelds sowie ein Nutzdatenfeld umfasst, Bestimmen der Länge des Felds für die laufende Nummer und anschließend Zuordnen des bestimmten Kanals zu einer Gruppe von Typen gemäß dem Ergebnis des vorhergehenden Bestimmungsschrittes. Selbstverständlich kann der im Zusammenhang mit der vorliegenden Erfindung verwendete Begriff Gruppe auch nur ein Gruppenmitglied umfassen.

Bevorzugt wird das jeweils ermittelte Ergebnis in einer übergeordneten Protokollschicht überprüft und für den Fall, dass das jeweilige ermittelte Ergebnis nicht verifiziert werden konnte, der jeweilige Bestimmungsschritt und ggf. nachfolgende Bestimmungsschritte sowie der Überprüfungsschritt wiederholt, bis das jeweilige ermittelte Ergebnis verifiziert werden konnte.

Der bestimmte Kommunikationskanal für die Kommunikation mit mindestens einem Teilnehmer ist von einem bestimmten Transportkanaltyp, insbesondere vom Typ FACH, RACH, PCH oder DCH, und von einem bestimmten Logikkanaltyp, insbesondere vom Typ BCCH, CCCH oder PCCH.

Gemäß einem weiteren Aspekt der vorliegenden Erfindung wird die obige Aufgabe auch gelöst durch eine Vorrichtung zur Durchführung des erfindungsgemäßen Verfahrens. Bevorzugte Ausbildungen der Erfindung sind Monitoring-Geräte oder Protokolltester, wobei auch vorgesehen werden kann, die software- oder hardwaremäßig realisierten Komponenten an einem Ort anzuordnen und die Übermittlung des mindestens einen Übertragungsparameters an einem anderen Ort durchzuführen.

Die Vorrichtung kann insbesondere dazu ausgelegt sein, die ermittelten Übertragungsparameter zur Konfiguration der Vorrichtung automatisch einzustellen, so dass die Anforderungen an die Vorbildung der Bedienperson niedrig gehalten werden können. Dadurch können Bedienpersonen bereits nach kurzer Einweisung die erfindungsgemäße Vorrichtung bedienen. In Anlehnung an den oben erwähnten hausinternen Stand der Technik kann die erfindungsgemäße Vorrichtung weiterhin einen Speicher umfassen oder mit einem Speicher gekoppelt sein, in dem Parametersätze für bestimmte Betreiber derartiger Übertragungssysteme abgelegt werden können, und von dem sie durch einen Benutzer als aktuell zu verwendende Parameter geladen werden können. In diesem Zusammenhang kann auch vorgesehen werden, sich aus derartigen Parametersätzen für den jeweiligen Annahmeschritt zu bedienen. Dadurch kann die Ermittlung der tatsächlichen Übertragungsparameter zeitlich deutlich komprimiert werden.

Weitere vorteilhafte Ausführungsformen ergeben sich aus den Unteransprüchen.

Im Nachfolgenden wird nun eine Ausführungsform der vorliegenden Erfindung unter Bezugnahme auf die beigefügten Zeichnungen näher beschrieben. Es zeigen:
- Fig. 1: in schematischer Darstellung Knoten und Schnittstellen eines UMTS-Mobilfunknetzes;
- Fig. 2: in schematischer Darstellung die an einer lub-Schnittstelle beteiligten Protokolle und Schichten;
- Fig.3: in schematischer Darstellung die unterschiedlichen an einer lub-Schnittstelle vorkommenden Typen von Kommunikationskanälen;
- Fig. 4: in Blockschaltbilddarstellung die Vorgehensweise zur Ermittlung, ob der vorliegende Kommunikationskanal vom Typ FACH, RACH, PCH oder DCH ist;
- Fig. 5: eine weitere Differenzierung für den Fall, dass der Kommunikationskanal vom Typ FACH ist;
- Fig. 6: eine weitere Differenzierung für den Fall, dass der Kommunikationskanal vom Typ RACH ist, und
- Fig. 7: eine weitere Differenzierung für den Fall, dass der Kommunikationskanal vom Typ PCH ist.

Wie bereits oben erwähnt, wird die vorliegende Erfindung am Beispiel einer lub-Schnittstelle in einem UMTS-Mobilfunknetz beschrieben. Ohne Einschränkung lässt sich das Verfahren an anderen Schnittstellen eines UMTS-Netzes oder eines anderen Kommunikationsnetzes durchführen.

In einem ersten Schritt wird eine Grobeinteilung vorgenommen, d.h. es wird bestimmt, ob es sich um einen Kanal eines Frame-Protokolls 22 handelt, siehe Fig. 2, oder nicht. Für den Fall, dass kein Frame-Protokoll 22 vorliegt, handelt es sich demnach um einen NBAP 28 oder einen ALCAP 26. Es wird also ermittelt, ob es sich bei einem bestimmten Kanal um einen Kanal zur Kommunikation zwischen Knoten des Übertragungssystems handelt oder um einen Kanal zur Kommunikation mit mindestens einem Teilnehmer. Dazu wird ein an der lub-Schnittstelle empfangener Datenstrom nach dem für die Kommunikation zwischen RNC 14 und Node B 16 oder die Kommunikation mit mindestens einem UE 18 in Betracht kommendes Kommunikationsprotokoll decodiert. Die Decodierung wird eingestellt, sobald mit dem gegenwärtig verwendeten Kommunikationsprotokoll korrekte decodierte Daten entstehen oder alle in Betracht kommenden Kommunikationsprotokolle keine korrekten decodierten Daten ergeben haben. Sind bei der Decodierung korrekte decodierte Daten entstanden und wurde ein Kommunikationsprotokoll für die Kommunikation zwischen den Knoten des Übertragungssystems verwendet oder sind keine korrekten decodierten Daten entstanden und wurden alle Kommunikationsprotokolle für die Kommunikation mit mindestens einem Teilnehmer verwendet, dient der vorliegende Kanal der Kommunikation zwischen Knoten des Übertragungssystems. Sind bei der Decodierung korrekte decodierte Daten entstanden und wurde ein Kommunikationsprotokoll für die Kommunikation mit mindestens einem Teilnehmer verwendet oder haben sich bei der Decodierung keine korrekten decodierten Daten ergeben und wurden alle Kommunikationsprotokolle für die Kommunikation zwischen den Knoten des Übertragungssystems verwendet, dient der vorliegende Kanal der Kommunikation mit mindestens einem Teilnehmer. Im ersten Fall handelt es sich daher um einen Kanal vom Typ NBAP oder ALCAP, während im zweiten Fall der Kanal ein Frame-Protokoll darstellt.

Für den Fall, dass es sich um einen NBAP 28 oder ALCAP 26 handelt, wird wie folgt weiter verfahren:

Zunächst wird versucht, den zu analysierenden Rahmen nach ALCAP- oder NBAP-Regeln zu decodieren. Wenn Decodierfehler auftreten, könnte es sich um das andere Protokoll handeln. Jedoch ist zumindest NBAP ein komplexes Protokoll, das ASN.1-Daten trägt, die durch Paketcodierregeln codiert wurden. Eine komplette Decodierung wäre daher ineffizient und zeitraubend. Dies ist insbesondere zu berücksichtigen bei der UMTS-Monitoring-Technologie, bei der die Verarbeitungsgeschwindigkeit ein kritischer Parameter ist. Bei dem erfindungsgemäßen Verfahren werden daher nur einige Oktette des zu analysierenden Rahmens ausgewertet und anschließend eine vorläufige Entscheidung getroffen, ob es sich um eine ALCAP- oder NBAP-Anwendung handelt. Unter vorläufiger Entscheidung ist zu verstehen, dass für jedes ausgewählte Datenpaket Punkte an entweder ALCAP oder NBAP vergeben werden. Diese Maßnahme ist nötig, da es Oktette gibt, die sowohl bei Decodierung nach ALCAP- als auch nach NBAP-Regeln zu korrekten Ergebnissen führen. Die durchzuführende Prozedur läuft daher beispielsweise wie folgt ab: Ist das erste Oktett gleich einem NBAP-Nachrichtentyp, beispielsweise Initiating Message, Outcome, Successful Outcome oder Unsuccessful Outcome, dann erhält NBAP einen ersten Punkt. Ist das zweite Oktett gleich einem gültigen NBAP-Verfahrenscode, z. B. id-RadioLinkSetup, dann erhält NBAP einen weiteren Punkt. Ist das fünfte Oktett ein gültiger ALCAP-Nachrichtentyp, erhält ALCAP einen Punkt. Ist das siebte Oktett vorhanden, d. h. die Rahmenlänge ist gleich oder größer als sieben, und ist dieses Oktett ein gültiger ALCAP-Parametertyp, erhält ALCAP einen weiteren Punkt. ALCAP erhält diesen Punkt auch, wenn keine Nachrichtenparameter vorhanden sind, d. h. der Rahmen enthält nur sechs Oktette. Schließlich erhält NBAP einen weiteren Punkt, falls Bit 7 oder Bit 3 im siebten Oktett gleich "1" ist, da diese Bits in gültigen ALCAP-Rahmen immer gleich "0" zu sein haben (sogenannte Spare Bits).

Am Ende des Algorithmus wird geprüft, welcher der beiden Kandidaten die meisten Punkte angesammelt hat und diesem wird dann der Zuschlag gegeben. Falls beide dieselbe Anzahl an Punkten erreicht haben, wird ALCAP zum Gewinner erklärt. Erstaunlicherweise hat sich bei praktischen Versuchen gezeigt, dass das Ergebnis nicht besser, d. h. nicht genauer war, falls weitere Rahmen desselben Kommunikationskanals diesem Algorithmus unterzogen wurden.

Wurde bei der erstgenannten Analyse festgestellt, dass es sich um ein Frame-Protokoll-Kanal handelt, wird wie folgt verfahren: unter den Frame-Protokoll-Kanälen gibt es drei Downlink-Datenkanaltypen, d. h. Datenkanäle, die zum Teilnehmer hin gerichtet sind, nämlich FACH, PCH und DSCH, und drei Uplink-Datenkanaltypen, d.h. Datenkanäle, die zum Knoten gerichtet sind, nämlich RACH, CPCH und USCH, und zwar zusätzlich zum DCH, der entweder ein Downlink, ein Uplink oder eine bidirektionale Verbindung sein kann. Jeder dieser Typen hat einen unterschiedlich strukturierten Header und Payload, zusätzlich zu einer großen Anzahl von Transportformaten, Transportformatzusammenstellungen und logischen Link-Kombinationen.

Unglücklicherweise ist es indes nicht möglich, aus dem Inhalt des Datenstroms die Kanaltypen zu unterscheiden oder die Konfiguration zu ermitteln, die für die Decodierung der Datenrahmen nötig wäre. Anders wäre dies bei Steuerrahmen, die durch den Rahmentyp und die Kontrollrahmentypfelder identifiziert werden könnten.

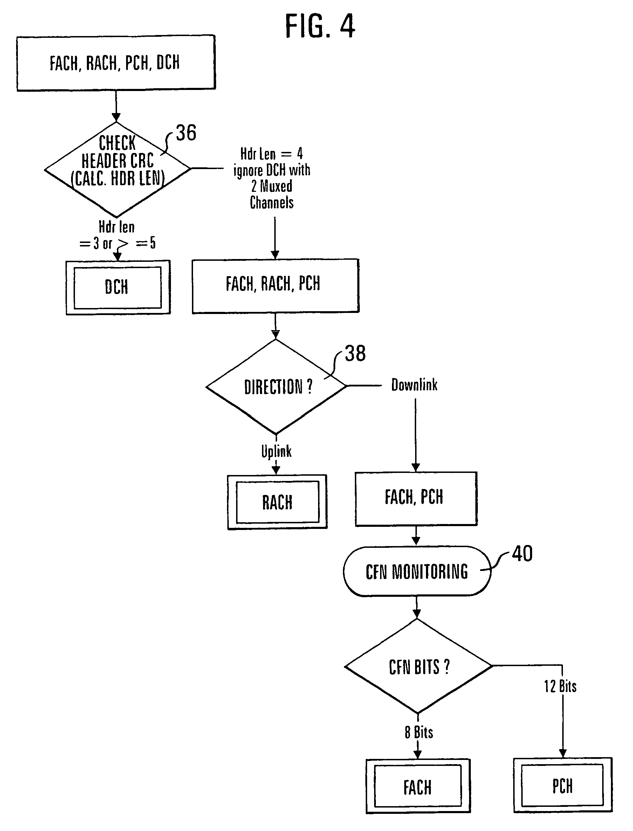

Im nachfolgenden wird beispielhaft die Unterscheidung der Datenrahmentypen FACH, PCH, RACH und DCH beschrieben, da dies diejenigen sind, die an einer lub-Schnittstelle für die gemeinsame Steuerungsebene am gebräuchlichsten sind. Mit Bezug auf Figur:4 ist es jedoch möglich, die Länge des Headers zu bestimmen und zwar durch Verwendung des Header-CRCs (Cyclic Redundancy Code), d. h. der Algorithmus nimmt eine bestimmte Länge an, berechnet den zugehörigen CRC und vergleicht ihn mit dem tatsächlichen CRC des vorliegenden Rahmens. Wenn die CRCs verschieden sind, wird dieser Schritt mit einem anderen Wert für die Header-Länge wiederholt. Sobald die Länge bekannt ist, können einige Rahmentypen unterschieden werden und das erste Byte der Payload kann spezifiziert werden. Der in Figur 4 dargestellte Algorithmus kann verwendet werden, um die Kanaltypen RACH, FACH und PCH voneinander zu unterscheiden, die für die Signalisierung verwendet werden, und den Kanaltyp des Datenstroms zu bestimmen. Er basiert auf folgenden Annahmen:
- es treten keine CPCH-, DSCH- und USCH-Typen auf, d. h. nur FACH-, RACH-, PCH- und DCH-Typen;
- es treten keine CRC-Fehler auf;
- DHCs müssen für die weitere Verarbeitung nicht ausgewertet werden und werden daher ignoriert;
- die Uplink- und Downlink-Richtungen sind bekannt.

Falls die Bedingung 36, siehe Figur 4, nicht erfüllt ist, d. h. CPCH und/oder DSCH-Rahmen existieren, dann funktioniert der Algorithmus im Falle von DSCH-Rahmen weiterhin, da DSCH-Rahmen eine Header-Größe von größer als 5 haben und ähnlich dem DCH-Typ separiert werden können. Nach der Separierung des DCH-Typs liegen demnach Kanaltypen mit einer Header-Länge von vier vor, nämlich FACH; RACH und PCH. Unter Bedingung 38 wird bestimmt, ob es sich um einen Uplink oder einen Downlink handelt. Handelt es sich um einen Uplink, ist der vorliegende Kanal vom Typ RACH. Handelt es sich um einen Downlink, ist der vorliegende Kanal vom Typ FACH oder PCH. Mit der Box 40 wird die laufende Nummer (CFN) ausgewertet, insbesondere die Bitlänge der laufenden Nummer. Weist diese 8 Bits auf, handelt es sich um einen Kanal vom Typ FACH, weist diese 12 Bits auf, handelt es sich um einen Kanal vom Typ PCH.

Im Falle von CPCH-Rahmen ist es nicht möglich, zwischen CPCH- und RACH-Rahmen unter Verwendung des in Figur 4 dargestellten Algorithmus zu unterscheiden, da beide exakt dieselbe Struktur haben, jedoch kann dann die Kenntnis der Abbildung der logischen Kanäle aus höheren Schichten, beispielsweise MAC oder RLC, verwendet werden, um die benötigten CPCH-Rahmen auszufiltern.

Ähnlich der Header-Länge kann der Payload-CRC verwendet werden, um die Länge des Payload-Rahmens zu bestimmen.

Die Bestimmung der Transportformate, der Transportformatzusammenstellungen oder der Kombinationen und Moden der logischen Kanäle ist deutlich schwieriger. Die 3GPP-Spezifikation beschreibt einige vorgegebene Konfigurationen und jeder Hersteller wendet bestimmte Einstellungen an, um sein System zu konfigurieren. Diese Parameter können in einer Datenbank abgelegt werden. Die meisten dieser Daten sind netzwerkabhängig. Bevorzugt wird daher eine Datenbank so ausgelegt, dass sie nicht nur die herstellerabhängigen Einstellungen speichert, sondern auch die netzwerkabhängigen. Diese Datenbanken können verwendet werden, um gemäß dem Verfahren "Versuch-und-Irrtum" die für eine korrekte Decodierung erforderlichen Einstellungen zu ermitteln. Ein anderer Weg die Transportformate zu bestimmen, verwendet die Informationsblöcke (SIBs) des NBAP-Systems, die im NBAP-Protokoll gemonitort werden können. Beide Methoden, d. h: die Verwendung einer Datenbank und die Verwendung der SIB-Informationen können auch zusammen verwendet werden, um die Anzahl der Möglichkeiten zu reduzieren.

Anschließend wird ermittelt, welche Logikkanäle auf den gemäß dem obigen Verfahren bestimmten Transportkanälen abgebildet sind. Dazu werden folgende Voraussetzungen angenommen:
- der obige auf die Frame-Protokoll-Kanal-Typen angewendete Algorithmus findet zumindest einen der folgenden Transportkanaltypen: FACH, RACH, PCH;
- nur die gemeinsamen Logiksteuerkanaltypen CCCH, SHCCH, BCCH und PCCH werden abgebildet;
- es liegt nur FDD (Frequency Division Duplex) vor, d. h. eine Abbildung auf SHCCH wird ignoriert.

Für die Beschreibung der Abbildung eines Transportkanals auf einen logischen Kanal werden fünf Parameter benötigt:
- der logische Kanaltyp;
- der RLC-Modus (Transparent, Acknowledge, Unacknowledge);
- der Wert des c/t-Felds, wenn ein Transportkanal auf mehr als einen logischen Kanal abgebildet wird (MUX);
- die Länge des RLC-Längenindikator-Felds (7 oder 15 Bit)
- der RLC-Verwender (PDCP oder RRC).

Von den ersten drei aufgelisteten Parametern können der Logikkanal-Typ und der RLC-Modus aus dem Transportkanal-Typ und den ersten Bits (Länge: 1 bis 8 Bits) der MAC PDU (TCTF = Target Channel Type Field) bestimmt werden, welche den Logikkanal-Typ beschreiben.

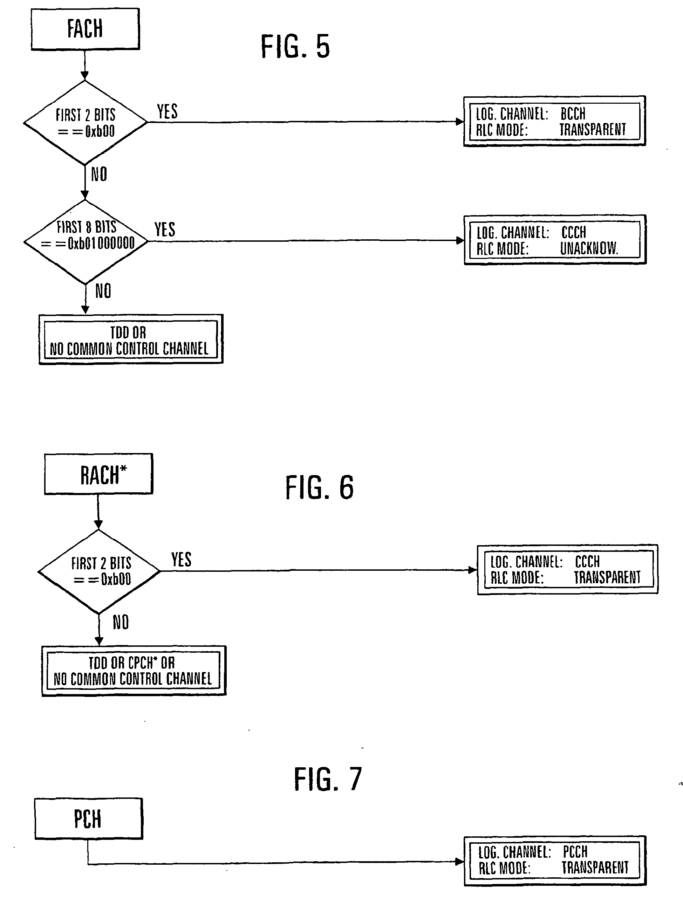

Figur 5 verdeutlicht die Vorgehensweise, sofern der Transportkanal vom Typ FACH ist: sind die ersten zwei Bits = "0xb00", ist der Logikkanal vom Typ BCCH und der RLC-Modus ist "transparent". Sind die ersten acht Bits gleich "0xb01000000", so ist der Logikkanal vom Typ CCCH und der RLC-Modus ist "Unacknowledged". Trifft keine der beiden Möglichkeiten zu, handelt es sich um ein TDD (Time Division Duplex) oder um keinen CCC (Common Control Channel)-Typ.

Wurde der Transportkanal als vom Typ "RACH" bestimmt, ist die weitere Vorgehensweise in Figur 6 dargestellt: Sind die ersten zwei Bits gleich "0xb00" so ist der logische Kanal vom Typ CCCH, der zugehörige RLC-Modus ist "transparent". Bei anderen ersten zwei Bits liegt entweder TDD vor oder ein CPCH oder kein CCCH (Common Control Channel). Der Stern in Figur 6 soll andeuten, dass der vorgestellte Algorithmus nicht zwischen RACH und CPCH unterscheiden kann. Daher ist es möglich, dass eine CPCH MAC PDU, deren erste zwei Bits gleich 0xb00 sind, fälschlich als ein RACH interpretiert wird, der auf einen CCCH abgebildet ist. Im Falle eines Transportkanals vom Typ PCH ist keine Unterscheidung nötig, siehe Figur 7, da PCH PDUs kein TCTF-Feld haben. Ein PCH wird immer auf einen logischen Kanal vom Typ PCCH abgebildet und der RLC-Modus ist immer "transparent".

Für logische CCCHs, siehe die zweite Annahme in der zuletzt aufgeführten Annahmenliste, wird ein Transportkanal immer auf einen einzelnen Logikkanal abgebildet. Daher ist der Wert des c/t-Feldes nicht nötig.

Die Länge des RLC-Längenindikator-Felds, die gleich 7 oder 15 Bit ist, muss aus den Frame-Protokoll-Transportformaten abgeleitet werden. Für logische Common Control Channels, siehe die Annahme 2 in der zuletzt aufgeführten Annahmenliste, wird der RLC nur durch den RRC benutzt.

Für den Fall, dass einige der jeweiligen im Abschnitt genannten Annahmen nicht vorliegen sollten, kann es zu Fehlentscheidungen kommen. Dies stellt jedoch soweit kein Problem dar, da üblicherweise beim Monitoren alle empfangenen Datenpakete zu Analysezwecken abgespeichert werden. Liefert nun der obige Algorithmus ein falsches Ergebnis, zeigt sich dies dadurch, dass die entsprechende Decodierung auf derselben oder einer höheren Protokollschicht zu keinen sinnvollen Ergebnissen führt. Anschließend kann dann ein anderer Übertragungsparameter auf die abgespeicherten Daten angewendet werden, wobei dies solange wiederholt wird, bis sich korrekte decodierte Daten ergeben.

Ergänzend sei darauf hingewiesen, dass beim erfindungsgemäßen Verfahren nicht alle benötigten Übertragungsparameter auf die vorgestellte Art und Weise bestimmt werden müssen. Die Vorteile des erfindungsgemäßen Verfahrens lassen sich, in geringerer Ausprägung selbstverständlich, bereits dann erzielen, wenn zumindest ein Übertragungsparameter auf die Art und Weise gemäß der Erfindung bestimmt wird.

## Patentansprüche

1. Verfahren zum Ermitteln mindestens eines Übertragungsparameters an einer zwischen einem ersten und einem zweiten Knoten eines Übertragungssystems angeordneten Schnittstelle, wobei zwischen dem ersten und dem zweiten Knoten mehrere Kanäle bestehen, die zum einen der Kommunikation zwischen Knoten des Übertragungssystems, zum anderen der Kommunikation eines Knotens des Übertragungssystems mit mindestens einem Teilnehmer dienen, wobei für die Kommunikation zwischen Knoten des Übertragungssystems eine vorgegebene Anzahl von Kommunikationsprotokollen in Betracht kommt, wobei der mindestens eine Übertragungsparameter angibt, ob es sich bei einem bestimmten Kanal um einen Kanal zur Kommunikation zwischen Knoten des Übertragungssystems handelt oder um einen Kanal zur Kommunikation mit mindestens einem Teilnehmer, bei dem zur Bestimmung des mindestens einen Übertragungsparameters folgende Schritte ausgeführt werden:
a) Annehmen eines bestimmten Kommunikationsprotokolls aus den für die Kommunikation zwischen den Knoten des Übertragungssystems oder für die Kommunikation mit mindestens einem Teilnehmer in Betracht kommenden Kommunikationsprotokollen;
b) Dekodieren eines an der Schnittstelle empfangenen Datenstroms unter Verwendung des in Schritt a) angenommenen Kommunikationsprotokolls; und
c) für den Fall, dass mit dem angenommenen Kommunikationsprotokoll korrekte dekodierte Daten entstehen oder alle in Betracht kommenden Kommunikationsprotokolle keine korrekten dekodierten Daten ergeben haben: Einstellen der Dekodierung;
für den Fall, dass mit dem angenommenen Kommunikationsprotokoll keine korrekten dekodierten Daten entstehen: Wiederholung der Schritte a) und b) unter der Annahme eines anderen Kommunikationsprotokolls;
d) Auswerten des Ergebnisses der Dekodierung und Treffen folgender Entscheidung:
d1) der vorliegende Kanal dient der Kommunikation zwischen Knoten des Übertragungssystems,
- falls sich bei der Dekodierung korrekte dekodierte Daten ergeben haben und ein Kommunikationsprotokoll für die Kommunikation zwischen den Knoten des Übertragungssystems verwendet wurde; oder
- falls sich bei der Dekodierung keine korrekten dekodierten Daten ergeben haben und alle Kommunikationsprotokolle für die Kommunikation mit mindestens einem Teilnehmer verwendet wurden;
oder
d2) der vorliegende Kanal dient der Kommunikation mit mindestens einem Teilnehmer,
- falls sich bei der Dekodierung korrekte dekodierte Daten ergeben haben und ein Kommunikationsprotokoll für die Kommunikation mit mindestens einem Teilnehmer verwendet wurde; oder
- falls sich bei der Dekodierung keine korrekten dekodierten Daten ergeben haben und alle Kommunikationsprotokolle für die Kommunikation zwischen den Knoten des Übertragungssystems verwendet wurden.

2. Verfahren nach Anspruch 1, für den Fall, dass die Entscheidung d1) getroffen wird und mehrere Typen von Kommunikationskanälen zwischen den Knoten des Systems in Betracht kommen, **gekennzeichnet durch** folgende weiteren Schritte:
e) Dekodieren mindestens einer ersten Datenmenge des empfangenen Datenstroms unter der Annahme, es handelt sich um einen Kommunikationskanal eines ersten Typs;
f) Auswerten des Ergebnisses der Dekodierung und Treffen folgender Entscheidung:
f1) falls sich bei der Dekodierung korrekte dekodierte Daten ergeben: Erhöhung eines Zählerstands zugunsten der Entscheidung, dass es sich um einen Kommunikationskanal des ersten Typs handelt, um 1;
f2) der vorliegende Kanal ist kein Kommunikationskanal des ersten Typs, falls sich bei der Dekodierung keine korrekten dekodierten Daten ergeben.

3. Verfahren nach Anspruch 2,
**dadurch gekennzeichnet,**
**dass** die Schritte e) und f) wiederholt werden unter der Annahme, es handelt sich um einen Kommunikationskanal zumindest eines zweiten oder weiteren Typs.

4. Verfahren nach Anspruch 2 oder 3,
**dadurch gekennzeichnet,**
**dass** die Schritte e) und f) wiederholt werden zumindest für eine zweite oder weitere Datenmenge.

5. Verfahren nach einem der Ansprüche 2 bis 4,
**dadurch gekennzeichnet,**
**dass** aufgrund des Zählerstands nach zumindest einer einmaligen Durchführung des Schritts f1) eine Entscheidung getroffen wird, wonach ein Kommunikationskanal des Typs vorliegt, der den höchsten Zählerstand aufweist, oder, wenn der höchste Zählerstand von mindestens zwei Typen von Kommunikationskanälen eingenommen wird, gemäß einer vorab getroffenen Vereinbarung entschieden wird, welcher Typ von Kommunikationskanal vorliegt.

6. Verfahren nach einem der vorhergehenden Ansprüche,
**dadurch gekennzeichnet,**
**dass** das Übertragungssystem ein UMTS-Netz ist, und die Schnittstelle eine lub-Schnittstelle oder eine lur-Schnittstelle, der erste Knoten ein RNC-Knoten, der zweite Knoten ein Node-B oder ein RNC-Knoten, ein Kommunikationskanal für die Kommunikation zwischen zwei Knoten vom Typ NBAP und/oder ein anderer vom Typ ALCAP ist.

7. Verfahren nach Anspruch 1, für den Fall, dass die Entscheidung d2) getroffen wird und mehrere Typen von Kommunikationskanälen zur Kommunikation mit mindestens einem Teilnehmer des Systems in Betracht kommen, **gekennzeichnet durch** folgende weiteren Schritte, die für zumindest eine Protokollschicht, insbesondere für mehrere Protokollschichten in serieller Reihenfolge von der niedrigsten zur höchsten beteiligten Protokollschicht, durchgeführt werden:
g) für eine vorbestimmte Datenmenge, insbesondere einen Rahmen, die zumindest ein Header-Kontrolldaten-Feld innerhalb eines Headerfelds sowie ein Nutzdatenfeld umfaßt, Annahme einer ersten Headerlänge, Berechnung des zugehörigen Header-Kontrolldaten-Felds, und Vergleich mit dem tatsächlichen Header-Kontrolldaten-Feld;
h) bei Übereinstimmen des berechneten Header-Kontrolldaten-Felds mit dem tatsächlichen Header-Kontrolldaten-Feld: in Abhängigkeit der ermittelten Headerlä nge Zuordnen des Kanals zu einem bestimmten Typ oder einer bestimmten Gruppe von Typen von Kommunikationskanälen;
bei Nicht-Übereinstimmen des berechneten Header-KontrolldatenFelds mit dem tatsächlichen Header-Kontrolldaten-Feld: solange Wiederholung des Schritts g) mit unterschiedlichen angenommenen Headerlängen, bis sich eine Übereinstimmung der berechneten Header-Kontrolldatenfelds mit dem tatsächlichen Header-Kontrolldaten-Feld ergibt.

8. Verfahren nach einem der Ansprüche 1 bis 7,
**dadurch gekennzeichnet,**
**dass** folgende weiteren Schritte durchgeführt wird:
i) Überprüfen, ob es sich bei dem bestimmten Kanal um einen Kanal zum Knoten oder um einen Kanal zum Teilnehmer handelt; und
j) Zuordnen des bestimmten Kanals zu einer Gruppe von Typen gemäß dem Ergebnis von Schritt i).

9. Verfahren nach einem der Ansprüche 1 bis 8,
**dadurch gekennzeichnet,**
**dass** folgende weitere Schritte durchgeführt werden:
k) für eine vorbestimmte Datenmenge, insbesondere einen Rahmen, die zumindest ein Feld für eine laufende Nummer einer Datenmenge, insbesondere eines Rahmens, innerhalb eines Headerfelds sowie ein Nutzdatenfeld umfaßt, Bestimmen der Länge des Felds für die laufende Nummer; und
l) Zuordnen des bestimmten Kanals zu einer Gruppe von Typen gemäß
dem Ergebnis von Schritt k).

10. Verfahren nach einem der Ansprüche 1 bis 9,
**gekennzeichnet durch** folgenden weiteren Schritt:
m) Überprüfung des jeweils ermittelten Ergebnisses in einer übergeordneten Protokollschicht; und
l) für den Fall, dass das jeweilige ermittelte Ergebnis nicht verifiziert werden konnte, Wiederholen des jeweiligen Bestimmungsschritts und gegebenenfalls nachfolgender Bestimmungsschritte und Wiederholung von Schritt m) bis das jeweilige ermittelte Ergebnis verifiziert werden konnte.

11. Verfahren nach einem der Ansprüche 1 bis 10,
**dadurch gekennzeichnet,**
**dass** der bestimmte Kommunikationskanal für die Kommunikation mit mindestens einem Teilnehmer vom Transportkanaltyp ist, insbesondere vom Typ FACH, RACH, PCH oder DCH, und vom Logikkanaltyp, insbesondere vom Typ BCCH, CCCH oder PCCH.

12. Vorrichtung zur Durchführung eines Verfahrens nach einem der Ansprüche 1 bis 11.

13. Vorrichtung nach Anspruch 12,
**dadurch gekennzeichnet,**
**dass** sie weiterhin dazu ausgelegt ist, die ermittelten Parameter zur Konfiguration der Vorrichtung automatisch einzustellen.

14. Vorrichtung nach Anspruch 12 oder 13,
**dadurch gekennzeichnet,**
**dass** sie weiterhin einen Speicher umfaßt oder mit einem Speicher gekoppelt ist, in den Parametersätze für bestimmte Betreiber derartiger Übertragungssysteme abgelegt werden können und von dem sie durch einen Benutzer als aktuell zu verwendende Parameter geladen werden können.

## Claims

1. Method for determining at least one transmission parameter at an interface disposed between a first and a second node of a transmission system, wherein several channels are present between the first and the second node, which serve for communication between nodes of the transmission system on the one hand and for communication of a node of the transmission system with at least one subscriber on the other hand, wherein a preset number of communication protocols is considered for communication between nodes of the transmission system, wherein the at least one transmission parameter indicates if a certain channel is a channel for communication between nodes of the transmission system or a channel for communication with at least one subscriber, wherein the following steps are performed for determining the at least one transmission parameter:
a) adopting a certain communication protocol among the communication protocols considered for communication between the nodes of the transmission system or for communication with at least one subscriber;
b) decoding a data stream received at the interface using the communication protocol adopted in step a); and
c) in case correct decoded data arises with the adopted communication protocol, or all of the considered communication protocols did not result in correct decoded data: stopping decoding;
in case no correct decoded data arises with the adopted communication protocol: repeating steps a) and b) adopting another communication protocol;
d) evaluating the result of decoding and making the following decision:
d1) the present channel serves for communication between nodes of the transmission system,
- if correct decoded data has resulted upon decoding and a communication protocol for communication between the nodes of the transmission system has been used; or
- if no correct decoded data has resulted upon decoding and all of the communication protocols for communication with at least one subscriber have been used;
or
d2) the present channel serves for communication with at least one subscriber
- if correct decoded data has resulted upon decoding and a communication protocol for communication with at least one subscriber has been used; or
- if no correct decoded data has resulted upon decoding and all of the communication protocols for communication between the nodes of the transmission system have been used.

2. Method according to claim 1, in case the decision d1) is made and several types of communication channels between the nodes of the system are considered, **characterized by** the following further steps:
e) decoding at least a first amount of data of the received data stream assuming it is a communication channel of a first type;
f) evaluating the result of decoding and making the following decision:
f1) if correct decoded data results upon decoding: incrementing a count by 1 in favor of the decision that it is a communication channel of the first type;
f2) the present channel is no communication channel of the first type, if no correct decoded data results upon decoding.

3. Method according to claim 2,
**characterized in that**
the steps e) and f) are repeated assuming it is a communication channel of at least a second or further type.

4. Method according to claim 2 or 3,
**characterized in that**
the steps e) and f) are repeated at least for a second or further amount of data.

5. Method according to any one of claims 2 to 4,
**characterized in that**
due to the count after performing step f1) at least once, a decision is made, according to which a communication channel of the type is present, which has the highest count, or, if the highest count is occupied by at least two types of communication channels, it is decided according to a previously made agreement, which type of communication channel is present.

6. Method according to any one of the preceding claims,
**characterized in that**
the transmission system is an UMTS network, and the interface is a lub interface or a lur interface, the first node is an RNC node, the second node is a Node B or an RNC node, a communication channel for communication between two nodes is of the type NBAP and/or another one of the type ALCAP.

7. Method according to claim 1, in case the decision d2) is made and several types of communication channels for communication with at least one subscriber of the system are considered, **characterized by** the following further steps, which are performed for at least one protocol layer, especially for plural protocol layers in serial order from the lowest to the highest protocol layer involved,:
g) for a predetermined amount of data, especially a frame, which includes at least one header control data field within a header field as well as a useful data field, assuming a first header length, calculating the associated header control data field and comparing with the actual header control data field;
h) upon correspondence of the calculated header control data field to the actual header control data field: depending on the determined header length, allocating the channel to a certain type or a certain group of types of communication channels;
upon non-correspondence of the calculated header control data field to the actual header control data field: repeating step g) with different assumed header lengths until correspondence of the calculated header control data field to the actual header control data field results.

8. Method according to any one of claims 1 to 7,
**characterized in that**
the following further steps are performed:
i) verifying if the certain channel is a channel to the node or a channel to the subscriber; and
j) allocating the certain channel to a group of types according to the result of step i).

9. Method according to any one of claims 1 to 8,
**characterized in that**
the following further steps are performed:
k) for a predetermined amount of data, especially a frame, which includes at least one field for a serial number of an amount of data, especially a frame, within a header field as well as a useful data field, determining the length of the field for the serial number; and
l) allocating the certain channel to a group of types according to the result of step k).

10. Method according to any one of claims 1 to 9,
**characterized by** the following further step:
m) verifying the respectively determined result in a higher-level protocol layer, and
n) in case the respective determined result could not be verified, repeating the respective determining step and optionally subsequent determining steps and repeating step m) until the respective determined result could be verified.

11. Method according to any one of claims 1 to 10,
**characterized in that**
the certain communication channel for communication with at least one subscriber is of the transport channel type, especially of the type FACH, RACH, PCH or DCH, and of the logic channel type, especially of the type BCCH, CCCH or PCCH.

12. Apparatus for performing a method according to any one of claims 1 to 11.

13. Apparatus according to claim 12,
**characterized in that**
it is further adapted to automatically adjust the determined parameters for configuration of the apparatus.

14. Apparatus according to claim 12 or 13,
**characterized in that**
it further includes a memory or is coupled to a memory, in which sets of parameters for certain providers of such transmission systems can be stored, and from which they can be loaded by a user as parameters currently to be used.

## Revendications

1. Procédé pour déterminer au moins un paramètre de transmission en une interface disposée entre un premier et un deuxième noeud d'un système de transmission, plusieurs canaux existant entre le premier et le deuxième noeud servant d'une part à la communication entre des noeuds du système de transmission, d'autre part à la communication entre un noeud du système de communication et au moins un participant, un nombre prédéterminé de protocoles de communication étant pris en considération dans la communication entre des noeuds du système de transmission, un paramètre de transmission au moins indiquant si, pour un canal déterminé, il s'agit d'un canal de communication entre des noeuds du système de transmission ou d'un canal de communication avec au moins un participant, dans lequel, pour déterminer le au moins un paramètre de transmission, les étapes suivantes sont exécutées :
a) admettre un protocole déterminé de communication parmi les protocoles de communication entrant en considération pour la communication entre les noeuds du système de transmission ou pour la communication avec au moins un participant ;
b) décoder un flux de données reçu à l'interface en utilisant le protocole de communication admis à l'étape a) ; et
c) lorsque, avec le protocole de communication admis, des données décodées correctes sont générées ou si tous les protocoles de communication pouvant être considérés n'ont pas eu pour résultat de données décodées correctes : régler le décodage;
lorsque, avec le protocole de communication admis, aucune donnée décodée correcte n'est générée : répéter les étapes a) et b) en admettant un autre protocole de communication ;
d) exploiter le résultat du décodage et prendre la décision suivante :
d1) le présent canal sert à la communication entre des noeuds du système de transmission,
- si au décodage, des données décodées correctes ont été générées et un protocole de communication pour la communication entre les noeuds du système de transmission a été utilisé ; ou
- si au décodage aucune donnée décodée correcte n'a été générée et tous les protocoles de communication pour la communication avec au moins un participant ont été utilisés ;
ou
d2) le présent canal sert à la communication avec au moins un participant,
- si au décodage, des données décodées correctes ont été générées et un protocole de communication pour la communication avec au moins un participant a été utilisé ; ou
- si au décodage aucune donnée décodée correcte n'a été générée et tous les protocoles de communication pour la communication entre les noeuds du système de transmission ont été utilisés.

2. Procédé selon la revendication 1 lorsque la décision d1) est prise et plusieurs types de canaux de communication entre les noeuds du système entrent en considération, **caractérisé par** les autres étapes suivantes :
e) décoder au moins une première quantité de données du flux de données reçu en admettant qu'il s'agit d'un canal de communication d'un premier type ;
f) exploiter le résultat du décodage et prendre la décision suivante :
f1) si des données décodées correctes sont générées au décodage : augmenter de 1 l'état d'un compteur en faveur de la décision qu'il s'agit d'un canal de communication du premier type ;
f2) le présent canal n'est pas un canal de communication du premier type si aucune donnée décodée correcte n'est générée au décodage.

3. Procédé selon la revendication 2,
**caractérisé en ce que**,
les étapes e) et f) sont répétées en admettant qu'il s'agit d'un canal de communication d'au moins un deuxième ou d'autres types.

4. Procédé selon la revendication 2 ou 3,
**caractérisé en ce que**,
les étapes e) et f) sont répétées au moins pour une deuxième ou d'autres quantités de données.

5. Procédé selon l'une quelconque des revendications 2 à 4,
**caractérisé en ce que**,
du fait de l'état du compteur, après au moins un parcours de l'étape f1), une décision est prise selon laquelle est présent un canal de communication du type qui présente le plus haut état de compteur ou, lorsque le plus haut état de compteur est adopté par au moins deux types de canaux de communication, il est décidé selon une convention adoptée préalablement du type du canal de communication présent.

6. Procédé selon l'une quelconque des précédentes revendications,
**caractérisé en ce que**,
le système de transmission est un réseau UMTS et l'interface une interface lub ou une interface lur, le premier noeud un noeud RNC, le deuxième noeud un noeud B ou un noeud RNC, un canal de communication pour la communication entre deux noeuds étant du type NBAP et/ou un autre du type ALCAP.

7. Procédé selon la revendication 1 lorsque la décision d2) est prise et plusieurs types de canaux de communication sont pris en considération pour la communication avec au moins un participant du système, **caractérisé par** les autres étapes suivantes, qui sont exécutées pour au moins une couche de protocole, en particulier pour plusieurs couches de protocole ordonnées en série, de la couche de protocole participant la plus basse à la plus haute :
g) pour une quantité prédéterminée de données, en particulier une trame qui comprend au moins un champ de données de contrôle d'en-tête à l'intérieur d'un champ d'en-tête ainsi qu'un champ de données utiles, admettre une première longueur d'en-tête, calculer le champ de données de contrôle d'entête correspondant et comparer avec le champ réel de données de contrôle d'en-tête ;
h) lors de la correspondance du champ calculé de données de contrôle d'en-tête avec le champ réel de données de contrôle d'en-tête : en fonction de la longueur d'en-tête déterminée, affecter le canal à un type déterminé ou un groupe déterminé de types de canaux de communication;
en cas de non-correspondance du champ calculé de données de contrôle d'entête avec le champ réel de données de contrôle d'en-tête : répéter l'étape g) avec différentes longueurs d'en-tête admises jusqu'à ce qu'une correspondance du champ calculé de données de contrôle d'en-tête avec le champ réel de données de contrôle d'en-tête existe.

8. Procédé selon l'une quelconque des revendications 1 à 7,
**caractérisé en ce que**,
les autres étapes suivantes sont exécutées :
i) vérifier si, dans le cas du canal déterminé, il s'agit d'un canal vers le noeud ou d'un canal vers le participant, et
j) affecter le canal déterminé à un groupe de types selon le résultat de l'étape i).

9. Procédé selon l'une quelconque des revendications 1 à 8,
**caractérisé en ce que**,
les autres étapes suivantes sont exécutées :
k) pour une quantité prédéterminée de données, en particulier une trame, qui comprend au moins un champ pour un numéro courant d'une quantité de données, en particulier d'une trame, à l'intérieur d'un champ d'en-tête, ainsi qu'un champ de données utiles, déterminer la longueur du champ pour le numéro courant ;
l) affecter le canal déterminé à un groupe de types selon le résultat de l'étape k).

10. Procédé selon l'une quelconque des revendications 1 à 9,
**caractérisé par** les autres étapes suivantes :
m) vérifier le résultat à chaque fois déterminé dans une couche supérieure de protocole ; et
n) lorsque le résultat à chaque fois déterminé n'a pas pu être vérifié, répéter l'étape de détermination correspondante et, éventuellement, les étapes de détermination suivantes et répéter l'étape m) jusqu'à ce que le résultat déterminé à ce moment puisse être vérifié.

11. Procédé selon l'une quelconque des revendications 1 à 10,
**caractérisé en ce que**,
le canal de communication déterminé pour la communication avec au moins un participant est du type canal de transport, en particulier du type FACH, RACH, PCH ou DCH, et du type canal logique, en particulier du type BCCH, CCCH ou PCCH.

12. Dispositif pour exécuter un procédé selon l'une quelconque des revendications 1 à 11.

13. Dispositif selon la revendication 12,
**caractérisé en ce que**,
il est en outre étudié de façon à régler automatiquement les paramètres déterminés pour la configuration du dispositif.

14. Dispositif selon la revendication 12 ou 13,
**caractérisé en ce que**,
il comprend en outre une mémoire ou il est couplé à une mémoire dans laquelle les jeux de paramètres de certains exploitants de tels systèmes de transmission peuvent être déposés et dont ils peuvent être chargés par un utilisateur en tant que paramètre à utiliser actuellement.
